# EUROPÄISCHE PATENTSCHRIFT

(11) **EP 3 864 389 B1**
(45) Veröffentlichungstag und Bekanntmachung des Hinweises auf die Patenterteilung: **19.06.2024**
(21) Anmeldenummer: 19779520.6
(22) Anmeldetag: 07.10.2019
(51) Int. Cl.: G01L 5/16, B23Q 17/09, G01L 5/00

(54) **WERKZEUG UND VERFAHREN ZUM MESSEN EINER WERKZEUGKRAFT**
TOOL AND METHOD FOR MEASURING A TOOL FORCE
OUTIL ET PROCEDE DE MESURE D'UNE FORCE SUR L'OUTIL

(30) Priorität: 10.10.2018 EP 18199541
(43) Veröffentlichungstag der Anmeldung: 18.08.2021
(73) Patentinhaber: Kistler Holding AG, 8408 Winterthur (CH)
(72) Erfinder: FIMPEL, Tobias, 8272 Ermatingen (CH); KEITZEL, Gunnar, 8408 Winterthur (CH); KOHLER, Denis, 8413 Neftenbach (CH)
(86) Internationale Anmeldenummer: PCT/EP2019/077063
(87) Internationale Veröffentlichungsnummer: WO 2020/074434

(56) Entgegenhaltungen:
- CN-A- 106 363 461
- CN-U- 207 888 246
- DE-A1- 3 908 175
- US-A- 5 168 758
- US-A- 5 824 917
- US-A1- 2016 045 994
- US-A1- 2017 122 823
- US-A1- 2018 264 614

## Beschreibung

### Technisches Gebiet

Die Erfindung betrifft ein Werkzeug mit einem Werkzeugschaft, der in eine Werkzeugaufnahme eines Werkzeughalters aufgenommen ist. Des Weiteren betrifft die Erfindung einen Kraftsensor, der eine Werkzeugkraft misst. Zudem betrifft die Erfindung ein Verfahren zum Messen einer Werkzeugkraft mit einem solchen Werkzeug und einem solchen Kraftsensor.

### Stand der Technik

Bei der Fertigung von Werkstücken mittels Werkzeugmaschinen besteht oft der Wunsch, die Kräfte zu messen, die auf ein Werkzeug wirken, das in einer Werkzeughalterung der Werkzeugmaschine angeordnet ist. Diese sogenannten Werkzeugkräfte sind in der Regel mehrdimensional. Beispielsweise wirkt bei einer Drehbank auf das Schneidwerkzeug sowohl die Schneidkraft, die vom Werkstück auf das Schneidwerkzeug ausgeübt wird, als auch eine Vorschubkraft.

Zum Messen solcher Werkzeugkräfte können Dynamometer eingesetzt werden. Nachteilhaft sind jedoch deren grosse Abmessungen, sodass Dynamometer im Maschinenraum oft stören und auch nicht an jeder beliebigen Stelle in einer Werkzeugmaschine eingebaut werden können. Zudem sind die Herstell- und Beschaffungskosten von Dynamometern relativ hoch.

Ebenfalls können zum Messen solcher Werkzeugkräfte Dehnmessstreifen eingesetzt werden. Prinzipbedingt erfordern Dehnmessstreifen eine gewisse Nachgiebigkeit der zu messenden Maschinenteile, insbesondere der Werkzeuge, welche in der Präzisionsbearbeitung von Werkstücken allerdings unerwünscht ist. Die Verwendung von Dehnmessstreifen führt daher zu einer geringen dynamischen Auflösung der Messungen.

Zur Bestimmung der Einspannkraft, die von einer Werkzeugaufnahme eines Werkzeughalters auf einen Werkzeugschaft ausgeübt wird, kann auch ein Drehmomentschlüssel herangezogen werden. Allerdings hängen die realen Einspannkräfte von den Reibungskoeffizienten der aufeinander bewegten Oberflächen ab und können daher von dem vom Drehmomentschlüssel angezeigten Werten abweichen, sodass eine präzise Bestimmung der Einspannkraft nicht möglich ist.

Die DE102013005555B3 offenbart eine Messplatte mit daran angebrachten Schub- und Drucksensoren, um beispielsweise die Schub-und Druckkräfte an einer Lagerfläche einer Presse messen zu können. Dazu werden jeweils ein Schub- und ein Drucksensor übereinander angeordnet und in einer hohlzylindrischen Ausnehmung der Messplatte mithilfe eines Druckstücks gegen den Boden der Messplatte verspannt.

Nachteilhaft dabei ist, dass die Messplatte eine zusätzliche Masse, d. h. Trägheit, in das Messsystem einfügt und daher für hochdynamische Anwendungen ungeeignet ist.

Die EP0433535A1 offenbart eine Mehrkomponenten-Kraftmessanordnung ohne Messplatte zur automatischen Messung von Kräften in Werkzeugmaschinen, wie beispielsweise einer Vorschubkraft, Passivkraft und Hauptschnittkraft, um Werkzeugverschleiss oder Werkzeugbruch erkennen zu können. Dabei ist der Mehrkomponenten-Kraftaufnehmer in einer taschenförmigen Aussparung des Maschinenschlittens eines Drehautomaten oder in einer Nut zwischen zwei Maschinenteilen angeordnet. Der Kraftaufnehmer kann keilförmig sein und mittels eines Anpresskeils vorgespannt werden. Hierbei ist nachteilhaft, dass aufgrund der Geometrie des Maschinenschlittens Fehler bei der Kraftmessung auftreten können, und dass sich die Masse des Maschinenschlittens ebenfalls nachteilhaft auf die dynamischen Eigenschaften der Messanordnung auswirkt.
Die DE3908175A1 zeigt einen Wandler für die Ermittlung einer Schneidkraft eines Schneidwerkzeugs einer Werkzeugmaschine. Das Schneidwerkzeug ist ein Bohrer, welcher über einen Adapter an einem Werkzeughalter der Werkzeugmaschine befestigt ist. Bohrer, Adapter und Werkzeughalter drehen sich im Betrieb um eine Achse. Der Wandler ist über Drucklager ortsfest zwischen dem Adapter und dem Werkzeughalter befestigt.
Die US2018264614A1 bezieht sich auf eine Linearführungseinrichtung für eine Vorschubachse einer Werkzeugmaschine. Auf oder in einer Sensorfläche sind Mikrosensoren mit Dehnmessstreifen angeordnet.
Die US5824917A1 offenbart eine Kraftmessvorrichtung mit einem Kraftsensor zum Messen von Kräften zwischen einander parallelen Maschinenteilen im Kraftnebenfluss.
Die US2017122823A1 zeigt eine Vorspanneinrichtung zum Vorspannen eines Kraftsensors. Die Vorspannvorrichtung ist in eine Aussparung in einem oder zwischen mehreren Maschinenteilen eingeführt. Der Kraftsensor befindet sich in einer Aufnahmetasche der Vorspannvorrichtung.
Die US51768758A1 offenbart einen Kraftsensor mit integrierten Vorspannvorrichtungen und eingebautem Körperschallsensor zum Einbau in einer Nische einer CNC gesteuerten Bearbeitungsmaschine.

Weiterhin sind statische Schneidewerkzeuge mit Kraftsensoren aus CN207888246U, US2016045994A1 und CN106363461A bekannt.

### Darstellung der Erfindung

Aufgabe der vorliegenden Erfindung ist es, ein dem eingangs genannten technischen Gebiet zugehörendes Werkzeug und ein Verfahren zu schaffen, welche eine präzisere und dynamischere Messung der Werkzeugkräfte gestattet. Insbesondere soll eine industrietaugliche Messung der Zeitspankräfte bei Drehbänken bereitgestellt werden.

Die Lösung der Aufgabe ist durch die Merkmale der unabhängigen Ansprüche definiert.
Gemäss der Erfindung umfasst ein Werkzeug einen Werkzeugschaft, der in einer Werkzeugaufnahme eines Werkzeughalters aufgenommen ist; das Werkzeug umfasst auch einen Kraftsensor, der in einer Aussparung am Werkzeugschaft angeordnet ist; und im Betrieb des Werkzeugs misst der Kraftsensor eine vom Werkzeugschaft auf den Werkzeughalter wirkende Werkzeugkraft.

Ein erfindungsgemäss angeordneter Kraftsensor gestattet das direkte Messen von Werkzeugkräften im Betrieb des Werkzeugs. Dadurch, dass der Kraftsensor am Werkzeugschaft angeordnet ist, kann die Kraftmessung direkt erfolgen. Dadurch wird sowohl die Präzision als auch die Dynamik der Kraftmessung verbessert. Beispielsweise können Vibrationen viel genauer gemessen werden, da der Kraftsensor nur die kleine Masse des Werkzeugschafts aufnimmt und nicht auch noch die viel grössere Masse eines Werkzeughalters. Auch können so kleinere Kräfte gemessen werden.

Der Kraftsensor ist entweder in einer Aussparung vom Werkzeugschaft oder in einer Aussparung vom Werkzeughalter oder in einer Aussparung eines Zwischenstücks angeordnet. Das Zwischenstück ist zwischen dem Werkzeugschaft und dem Werkzeughalter angeordnet. Natürlich kann ein Kraftsensor sowohl am Werkzeugschaft als auch Werkzeughalter und auch am Zwischenstück angeordnet sein.

Mit dem Kraftsensor ist es möglich, eine beliebige Werkzeugkraft, wie beispielsweise eine Druckkraft, eine Biegekraft, eine Torsionskraft, eine Schnittkraft oder eine Vorschubkraft des Werkzeugschafts zu messen. Der Kraftsensor weisst eine Kontaktfläche auf und misst die auf die Kontaktfläche wirkende Werkzeugkraft. Über die Kontaktfläche ist der Kraftsensor im mechanischen Kontakt mit dem Werkzeugschaft.

Bevorzugt wird ein Kraftsensor mit kleinen Abmessungen eingesetzt. Ein Durchmesser des Kraftsensors kann kleiner als 15mm sein, bevorzugt kleiner als 10mm, und besonders bevorzugt 7mm oder kleiner sein. Eine Dicke des Kraftsensors kann kleiner als 7mm sein, bevorzugt kleiner als 5mm sein, und besonders bevorzugt 3mm oder kleiner sein. Ein Volumen des Kraftsensors kann bevorzugt kleiner als 500mm³ sein, besonders bevorzugt kleiner als 300mm³, und besonders bevorzugt 100mm³ oder kleiner sein.

Ein Kraftsensor mit kleinen Abmessungen hat den Vorteil, dass er leicht am Werkzeugschaft oder am Werkzeughalter oder am Zwischenstück anbringbar ist. Ausserdem lässt sich ein solcher Kraftsensor auch bei einem Werkzeug mit einem kleinen Werkzeugschaft oder kleinem Werkzeughalter oder einem kleinen Zwischenstück einsetzen.

Der Werkzeugschaft oder der Werkzeughalter oder das Zwischenstück hat bevorzugt einen eckigen Querschnitt, insbesondere einen rechteckigen oder quadratischen Querschnitt.

Die Aussparung kann so bemessen sein, dass der Kraftsensor spannungsfrei und/oder passgenau von der Aussparung aufgenommen werden kann. Der Kraftsensor kann bereichsweise über die Aussparung hinaus hervorstehen, damit ein mechanischer Kontakt zwischen dem Werkzeugschaft und dem Werkzeughalter oder zwischen dem, Werkzeugschaft und dem Zwischenstück einzig über die Kontaktfläche vom Kraftsensor erfolgt und ein Kraftanteil der gemessenen Werkzeugkraft 100% beträgt. Dies hat den Vorteil einer Kraftmessung mit maximal hoher Empfindlichkeit, da kein Kraftanteil in einem Kraftnebenschluss ausserhalb des Kraftsensors 30 wirkt.

Der Kraftsensor kann aber auch vollständig in der Aussparung angeordnet sein, damit ein mechanischer Kontakt zwischen dem Werkzeugschaft und dem Werkzeughalter oder zwischen dem Werkzeugschaft und dem Zwischenstück über eine gemeinsame Kontaktfläche vom Kraftsensor mit dem Werkzeugschaft oder über eine gemeinsame Kontaktfläche vom Kraftsensor mit dem Werkzeughalter oder über eine gemeinsame Kontaktfläche vom Kraftsensor mit dem Zwischenstück erfolgt und ein Kraftanteil der gemessenen Werkzeugkraft weniger als 100% beträgt. Dies hat den Vorteil einer Kraftmessung mit hoher mechanischer Stabilität und hoher Eigenfrequenz, da kein mechanisches Durchbiegen vom Werkzeugschaft möglich ist.

Im Betrieb des Werkzeugs, insbesondere wenn das Werkzeug in einer Werkzeugaufnahme eines Werkzeughalters eingespannt ist, ist der Kraftsensor selbstverständlich nicht mehr spannungsfrei, und folglich auch nicht mehr spannungsfrei in einer Aussparung des Werkzeugschafts oder des Zwischenstücks angeordnet.

In einer besonderen Ausführungsform ist das Werkzeug ein Schneidwerkzeug.

Da Schneidwerkzeuge in der Regel feststehend und rotationsfrei angeordnet sind, beispielsweise in einem rotationsfreien Werkzeughalter, lässt sich hier eine Kraftmessung besonders einfach durchführen.

Unter Schneidwerkzeugen sind Zerspanungsdrehwerkzeuge zu verstehen, wie sie beispielsweise bei Drehmaschinen und/oder Drehbänken eingesetzt werden. Dabei rotiert das Schneidwerkzeug selbst nicht, sondern das Werkstück, das mit dem Schneidwerkzeug bearbeitet werden soll, rotiert.

Natürlich ist es auch möglich, andere Werkzeuge, wie beispielsweise Bohrer oder Fräsköpfe, einzusetzen. Solche Werkzeuge haben in der Regel einen rotationssymmetrischen Werkzeugschaft, denn solche Werkzeuge rotieren in der Regel und sind in einem Werkzeughalter angeordnet, der selbst auch rotiert. Folglich misst der Kraftsensor nicht nur die Werkzeugkraft, sondern auch noch eine durch die Rotation des Kraftsensors bedingte Zentripetalkraft.

Denkbar wäre es auch, Werkzeuge mit unbestimmter Schneide zu verwenden, wie beispielsweise Schleifwerkzeuge.

Der Werkzeughalter kann beispielsweise der Maschinenschlitten einer Drehmaschine und/oder einer Drehbank sein, ein Bohrfutter oder eine Aufnahme für einen Fräskopf.

In einer besonderen Ausführungsform weist die Werkzeugaufnahme des Werkzeughalters eine Einspannvorrichtung zum Einspannen des Werkzeugschafts auf. Insbesondere weist die Einspannvorrichtung einen Keil auf. Damit ist es besonders einfach möglich, einen Werkzeugschaft des Werkzeugs in der Werkzeugaufnahme des Werkzeughalters zu befestigen. Ein Keil hat den Vorteil, dass er beispielsweise in vertikaler Richtung spannbar ist, und auch eine horizontale Kraft auf den Werkzeugschaft ausüben kann.

In einer besonderen Ausführungsform ist der Kraftsensor nein piezoelektrischer Kraftsensor. Piezoelektrische Kraftsensoren sind an sich bekannt und kommerziell erhältlich. Sie zeichnen sich durch hohe Dynamik und Präzision aus.

Vorteilhafterweise kann ein Kraftsensor vom Typ 9131B der Firma Kistler eingesetzt werden.

Alternativ wäre es auch möglich, Dehnmessstreifen einzusetzen oder Dynamometer, wenn es der Bauraum zulässt.

In einer besonderen Ausführungsform ist der Kraftsensor ein Mehrachsenkraftsensor.

Damit ist es möglich, Werkzeugkräfte, die in verschiedene Richtungen wirken, gleichzeitig zu messen. Beispielsweise können so neben den Schneidkräften bzw. Zerspankräften, die beim Schneiden bzw. Zeitspannen von Werkstücken entstehen, auch Vorschubkräfte des Werkzeugs gemessen werden. Wenn der Werkzeugschaft in einer Werkzeugaufnahme eingespannt ist, kann beispielsweise auch eine Einspannkraft gemessen werden.

Natürlich wäre es auch möglich, mehrere Kraftsensoren, die die Werkzeugkraft jeweils nur in eine Richtung messen, in verschiedenen Richtungen anzuordnen, um so die Werkzeugkräfte in verschiedene Richtungen gleichzeitig messen zu können.

In einer besonderen Ausführungsform ist der Kraftsensor derart ausgebildet, dass gemessenen Signale an eine Auswerteeinheit ableitbar sind. Beispielsweise kann der Kraftsensor ein Kabel oder eine Funkstrecke aufweisen, mit dem die gemessenen Signale an eine Auswerteeinheit ableitbar sind.

Dies ermöglicht es einer Auswerteeinheit beispielsweise zu erkennen, ob zulässige Kraftwerte überschritten werden und damit eine Beschädigung des Werkzeugs und oder des Werkzeughalters droht. Beim plötzlichen Zurückgehen beispielsweise von Schneidkräften kann die Auswerteeinheit auf einen Werkzeugbruch schliessen. In allen Fällen kann die Auswerteeinheit diese Informationen nutzen, um eine Werkzeugmaschinensteuerung geeignet zu beeinflussen.

Auch ist es möglich, dass die Auswerteeinheit bei einem rotierenden Werkzeug eine Zentripetalkraft aus dem gemessenen Signal berechnen kann, um so die verbleibenden Werkzeugkräfte genauer bestimmen zu können. Natürlich ist es auch möglich, aus einer gemessenen Zentripetalkraft auf eine Rotationsgeschwindigkeit des Werkzeugs zu schliessen.

In einer besonderen Ausführungsform ist der Kraftsensor derart ausgebildet, dass vom Kraftsensor gemessenen Signale in Echtzeit überwachbar. Beispielsweise kann der Kraftsensor ein Kabel oder eine Funkstrecke aufweisen, mit dem die gemessenen Signale an eine Auswerteeinheit ableitbar sind, wobei die Bandbreite des Kabels oder der Funkstrecke grösser ist als die Dynamik der gemessenen Signale, sodass die gemessenen Signale verzögerungsfrei überwachbar sind.

Dies bietet insbesondere bei einer automatisierten Fertigung den Vorteil, dass schnell auf Änderungen der Werkzeugkräfte reagiert werden kann. Beispielsweise können gebrochene Werkzeuge schnell erkannt und dann ausgetauscht werden. Aufgrund der hohen Genauigkeit und Dynamik der erfindungsgemässen Kraftmessung können Fehlalarme reduziert werden.

Überwachen bedeutet in diesem Zusammenhang, dass die gemessenen Signale mit einem oder mehreren vorgegebenen Schwellwerten verglichen werden, oder mit vordefinierten Mustern verglichen werden, um in Echtzeit ein oder mehrere Ausgangs- und/oder Entscheidungssignale zu erzeugen. Dies kann beispielsweise von einer Auswerteeinheit erledigt werden.

Alternativ und/oder zusätzlich ist es auch möglich, die gemessenen Signale zu einem späteren Zeitpunkt zu analysieren und auszuwerten.

Bevorzugt umfasst das Werkzeug auch eine Auswerteeinheit. Die Signale werden dann vom Kraftsensor beispielsweise über ein Kabel oder eine Funkstrecke an die Auswerteeinheit abgeleitet. Zwischen dem Kraftsensor und der Auswerteeinheit können sich noch ein Ladungsverstärker und/oder eine Digitalisierungsvorrichtung befinden.

Die Auswerteeinheit kann eine Überwachung des Werkzeugklemmprozesses gestatten. Des Weiteren können Zerspanprozesse analysiert und optimiert werden. Verschiedene Werkzeuge können bewertet und verglichen werden. Die Überwachung von Zerspanprozessen kann auch der Qualitätssicherung dienen.

In einer besonderen Ausführungsform vom Werkzeug ist der Kraftsensor mit einer Vorspannkraft vorgespannt.

Diese Vorspannkraft ermöglicht es, dass mit dem Kraftsensor auch "negative" Kräfte gemessen werden können, d. h. Kräfte, die der Vorspannkraft entgegenwirken und ohne Vorspannkraft nicht gemessen werden könnten. Ausserdem kann die Vorspannung so eingestellt werden, dass sich der Kraftsensor über den gesamten gewünschten Messbereich in einem Bereich mit grosser Linearität befindet, d. h. in einem linearen Messbereich befindet.

Ausserdem ist es möglich, dass der Kraftsensor die Vorspannkraft misst, wenn das Werkzeug in Ruhe ist, d. h. nicht im Betrieb ist. Wenn diese Vorspannkraft bekannt ist, können im Betrieb die zuvor genannten Werkzeugkräfte wie beispielsweise eine Druckkraft, eine Biegekraft, eine Torsionskraft, eine durch eine Werkzeugrotation bedingte Zentripetalkraft, eine Schnittkraft, eine Vorschubkraft, oder Kombinationen davon gemessen werden.

In einer besonderen Ausführungsform vom Werkzeug ist die Vorspannkraft einstellbar.

Damit ist es beispielsweise möglich, den Kraftmessbereich einzustellen.

In einer besonderen Ausführungsform vom Werkzeug entspricht die Vorspannkraft einer Einspannkraft, die von einer Einspannvorrichtung der Werkzeugaufnahme auf den Kraftsensor wirkt.

Mittels einer Einspannvorrichtung der Werkzeugaufnahme kann sehr einfach eine Einspannkraft von der Werkzeugaufnahme auf den Werkzeugschaft ausgeübt werden. Da der Kraftsensor immer, und nicht nur in dieser Ausführungsform, zwischen der Werkzeugaufnahme und dem Werkzeugschaft angeordnet ist, wirkt auch auf den Kraftsensor die Einspannkraft. Sofern der Kraftsensor vor dem Einspannen spannungsfrei zwischen der Werkzeugaufnahme und dem Werkzeugschaft angeordnet war, entspricht nun die Einspannkraft der Vorspannkraft des Kraftsensors. Damit ist es möglich, dass der Kraftsensor die Einspannkraft der Einspannvorrichtung misst.

Insbesondere bei bekannter Vorspann- bzw. Einspannkraft ist es mit dem erfindungsgemässen Werkzeug möglich, die anderen zuvor genannten Werkzeugkräfte zu ermitteln.

In einer besonderen Ausführungsform vom Werkzeug weist der Kraftsensor einen Form- und/oder Kraftschluss mit dem Werkzeugschaft und/oder der Werkzeugaufnahme auf.

Ein solcher Form- und/oder Kraftschluss ist beispielsweise mit einer Einspannvorrichtung besonders einfach herstellbar. Ausserdem ermöglicht es ein Form- und/oder Kraftschluss, dass Werkzeugkräfte in verschiedenen Richtungen gemessen werden können.

In einer besonderen Ausführungsform vom Werkzeug ist der Form- und/oder Kraftschluss reversibel.

Unter einem reversiblen Form- und/oder Kraftschluss soll insbesondere ein Form- und/oder Kraftschluss verstanden werden, der irreversibel lösbar ist.

Ein solcher reversibler Form- und/oder Kraftschluss ist beispielsweise mit einer Einspannvorrichtung besonders einfach herstellbar. Er ermöglicht beispielsweise ein schnelles Wechseln des Werkzeugs, in dem die Einspannvorrichtung geöffnet, d. h. entspannt wird, dass Werkzeug gewechselt wird, und anschliessend wird die Einspannvorrichtung wieder geschlossen, d. h. gespannt.

In einer besonderen Ausführungsform vom Werkzeug ist der Form- und/oder Kraftschluss reproduzierbar.

Ein solcher reproduzierbarer Form- und/oder Kraftschluss ist beispielsweise mit einer Einspannvorrichtung besonders einfach herstellbar.

Unter einem reproduzierbaren Form- und/oder Kraftschluss soll insbesondere ein Form- und/oder Kraftschluss mit einer reproduzierbaren Einspannkraft verstanden werden.

Die Erfindung betrifft auch ein Verfahren zum Messen einer Werkzeugkraft, mit einem Werkzeug, das einen Werkzeugschaft umfasst, der in einer Werkzeugaufnahme eines Werkzeughalters aufgenommen ist; das Werkzeug umfasst auch einen Kraftsensor; das Verfahren umfasst die Schritte: Anordnen eines Kraftsensor zwischen dem Werkzeugschaft des Werkzeugs und der Werkzeugaufnahme des Werkzeughalters; und Einspannen des Kraftsensors mithilfe einer Einspannvorrichtung der Werkzeugaufnahme; im Betrieb des Werkzeugs misst der Kraftsensor die vom Werkzeugschaft auf den Werkzeughalter wirkende Werkzeugkraft.

In einer bevorzugten Ausführungsform weist das Verfahren zusätzlich den Schritt des Kalibrierens auf.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen:
Fig. 1 eine erste Ausführungsform des erfindungsgemässen Werkzeugs im Querschnitt, mit einer Aussparung für den Drucksensor, die im Werkzeugschaft angeordnet ist, wobei einzig eine Kontaktfläche vom Drucksensor am Werkzeughalter anliegt,
Fig. 2 eine Draufsicht der ersten Ausführungsform des erfindungsgemässen Werkzeugs nach Fig. 1,
Fig. 3 eine zweite Ausführungsform des erfindungsgemässen Werkzeugs im Querschnitt, mit einer Aussparung für den Drucksensor, die in einem Zwischenstück angeordnet ist, wobei einzig eine Kontaktfläche vom Drucksensor am Werkzeugschaft anliegt,
Fig. 4 eine Draufsicht der zweiten Ausführungsform des erfindungsgemässen Werkzeugs nach Fig. 3,
Fig. 5 eine dritte Ausführungsform des erfindungsgemässen Werkzeugs im Querschnitt, mit einer Aussparung für den Drucksensor, die im Werkzeughalter angeordnet ist, wobei einzig eine Kontaktfläche vom Drucksensor am Werkzeugschaft anliegt,
Fig. 6 eine vierte Ausführungsform des erfindungsgemässen Werkzeugs im Querschnitt, mit einer Aussparung für den Drucksensor, die im Werkzeughalter angeordnet ist, wobei einzig eine Kontaktfläche vom Drucksensor an einem Zwischenstück anliegt,
Fig. 7 eine fünfte Ausführungsform des erfindungsgemässen Werkzeugs im Querschnitt, mit einer Aussparung für den Drucksensor, die im Werkzeugschaft angeordnet ist, wobei eine gemeinsame Kontaktfläche von Drucksensor und Werkzeugschaft am Werkzeughalter anliegt,
Fig. 8 eine sechste Ausführungsform des erfindungsgemässen Werkzeugs im Querschnitt, mit einer Aussparung für den Drucksensor, die in einem Zwischenstück angeordnet ist, wobei eine gemeinsame Kontaktfläche von Drucksensor und Zwischenstück am Werkzeugschaft anliegt,
Fig. 9 eine siebte Ausführungsform des erfindungsgemässen Werkzeugs im Querschnitt, mit einer Aussparung für den Drucksensor, die im Werkzeughalter angeordnet ist, wobei eine gemeinsame Kontaktfläche von Drucksensor und Werkzeughalter am Werkzeugschaft anliegt, und
Fig. 10 eine achte Ausführungsform des erfindungsgemässen Werkzeugs im Querschnitt, mit einer Aussparung für den Drucksensor, die im Werkzeughalter angeordnet ist, wobei eine gemeinsame Kontaktfläche von Drucksensor und Werkzeughalter an einem Zwischenstück anliegt.

Grundsätzlich sind in den Figuren gleiche Teile mit gleichen Bezugszeichen versehen.

### Wege zur Ausführung der Erfindung

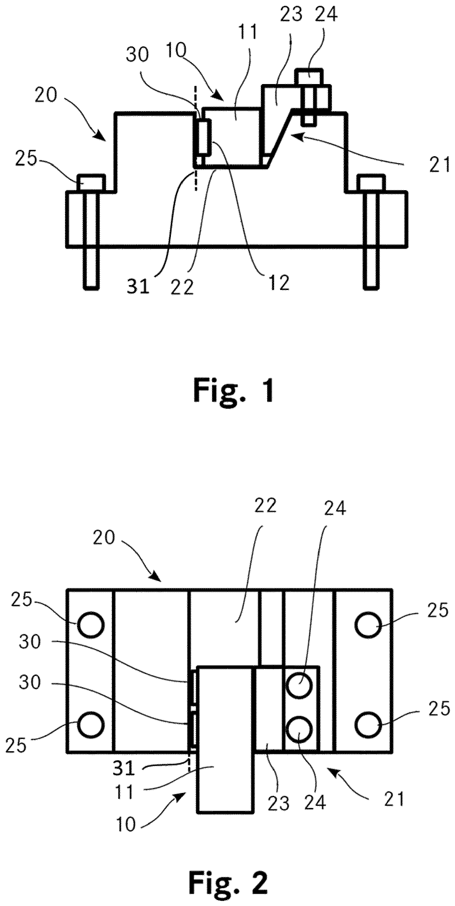

Die Fig. 1 bis 10 zeigen mehrere Ausführungsformen eines Werkzeugs 10 mit einem Kraftsensor 30.

Der Kraftsensor 30 ist vorzugsweise ein piezoelektrischer Kraftsensor. Ein piezoelektrischer Kraftsensor weist ein piezoelektrisches Element, eine Elektrode, einen elektrischen Leiter und eine Kontaktfläche auf. Der Kraftsensor 30 misst eine auf die Kontaktfläche wirkende Werkzeugkraft. Die Kontaktfläche ist aus mechanisch beständigem Material und ist zylinderförmig oder hohlzylinderförmig. Das piezoelektrische Element ist zylinderförmig oder hohlzylinderförmig und besteht aus piezoelektrischem Material wie Quarz (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, Piezokeramik, usw. Das piezoelektrische Element ist so orientiert, dass es eine hohe Empfindlichkeit für die aufzunehmende Werkzeugkraft hat. Vorzugsweise ist das piezoelektrische Element so orientiert, dass auf den gleichen Oberflächen auf denen die Werkzeugkraft einwirkt, auch elektrische Polarisationsladungen erzeugt werden. Die Elektrode ist ebenfalls zylinderförmig oder hohlzylinderförmig und ist vorzugsweise direkt auf der Oberfläche vom piezoelektrischen Element angeordnet, auf die auch die Werkzeugkraft einwirkt. Die Elektrode nimmt die elektrischen Polarisationsladungen als Signale ab. Die Signale sind proportional zur Grösse der Werkzeugkraft. Vorzugsweise ist die Elektrode gegenüber dem Werkzeug oder dem Werkzeughalter oder der Kontaktfläche elektrisch isoliert. Vorzugsweise ist die Elektrode eine elektrisch isolierende Folie, die einseitig oder beidseitig mit elektrisch leitfähigem Material beschichtet ist. Der elektrische Leiter ist mit der Elektrode verbunden und leitet die Signale von der Elektrode zu einer Steckverbindung für ein Signalkabel, welches Signalkabel die Signale wiederum zu einer Auswerteeinheit ableitet. Alternativ leitet der mit der Elektrode verbundene elektrische Leiter die Signale zu einer Funkeinrichtung, welche Funkeinrichtung die Signale wiederum über eine Funkstrecke zu einer Auswerteeinheit ableitet.

Das Werkzeug 10 umfasst einen Werkzeughalter 20 und einen Werkzeugschaft 11. Der Werkzeughalter 20 umfasst eine Werkzeugaufnahme 21. Die Werkzeugaufnahme 21 ist dazu eingerichtet, den Werkzeugschaft 11 aufzunehmen. Die Werkzeugaufnahme 21 weist dazu eine Vertiefung 22 sowie einen Keil 23 auf der mittels einer Einspannschraube 24 so verstellt werden kann, dass er eine Einspannkraft auf den Werkzeugschaft 11 ausüben kann, wenn dieser in der Vertiefung 22 angeordnet ist. Der Werkzeughalter 20 kann mit Befestigungsschrauben 25 an einem Werkzeugschlitten (nicht dargestellt) befestigt sein.

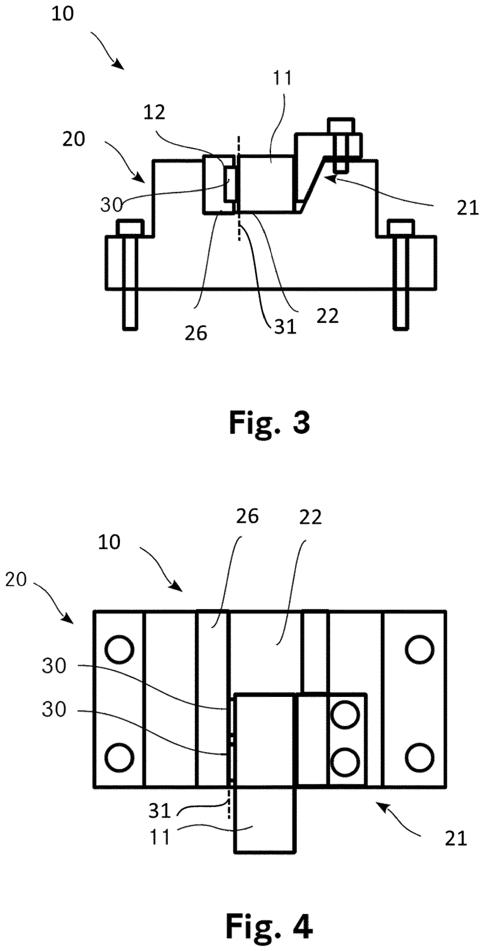

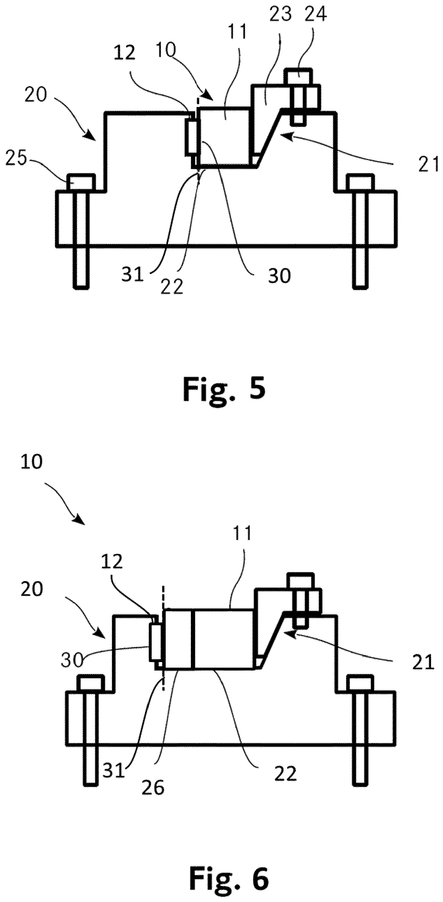

Der Kraftsensor 30 ist in einer Aussparung 12 am Werkzeugschaft 11 angeordnet. Die Aussparung 12 ist in einem mechanisch beständigen Material angeordnet. Bei dem Material handelt es sich entweder um den Werkzeugschaft 11 (Fig. 1, 2, 7) oder um einen Werkzeughalter 20 (Fig. 5, 6, 9, 10) oder um ein Zwischenstück 26 (Fig. 3, 4, 8).

Die Aussparung 12 ist zylinderförmig oder hohlzylinderförmig. Der Kraftsensor 30 kann ein zylinderförmiges oder hohlzylinderförmiges Gehäuse aus mechanisch beständigem Material aufweisen, welches Gehäuse das piezoelektrische Element, die Elektrode und den elektrischen Leiter aufnimmt. Mit der Kontaktfläche ist das Gehäuse vorzugsweise stoffschlüssig verschlossen. Mit dem Gehäuse ist der Kraftsensor 30 in der Aussparung 12 angeordnet. Die Steckverbindung ist am Gehäuse angeordnet, so dass das Signalkabel in der Aussparung 12 über die Steckverbindung mit dem elektrischen Leiter verbunden ist. Alternativ ist die Funkeinrichtung im Gehäuse angeordnet, so dass der elektrische Leiter im Gehäuse mit der Funkeinrichtung verbunden ist. Der Kraftsensor 30 kann aber auch gehäuselos sein, in dem Fall nimmt die Aussparung 12 das piezoelektrische Element, die Elektrode und den elektrischen Leiter auf. Die Steckverbindung ist dann im Material um die Aussparung 12 angeordnet, so dass das Signalkabel über die Steckverbindung im Material um die Aussparung 12 mit dem elektrischen Leiter verbunden ist. Alternativ ist die Funkeinrichtung im Material um die Aussparung 12 angeordnet, so dass der elektrische Leiter mit der Funkeinrichtung verbunden ist. Mit der Kontaktfläche ist die Aussparung 12 dann vorzugsweise stoffschlüssig verschlossen.

In der ersten Ausführungsform des Werkzeugs 10 gemäss Fig. 1 und 2 ist der Kraftsensor 30 nicht vollständig in der Aussparung 12 im Werkzeugschaft 11 angeordnet. Nicht vollständig in der Aussparung 12 im Werkzeugschaft 11 angeordnet heisst im Sinne der Erfindung, dass der Kraftsensor 30 mit seiner Kontaktfläche bereichsweise über den Werkzeugschaft 11 hervorsteht. Eine Kontaktfläche vom Werkzeughalter 20 und die Kontaktfläche vom Kraftsensor 30 liegen in einer Kontaktebene 31 aneinander an. In der Kontaktebene 31 erfolgt ein mechanischer Kontakt zwischen dem Werkzeugschaft 11 und der Kontaktfläche vom Werkzeughalter 20 einzig über die Kontaktfläche vom Kraftsensor 30. In dieser ersten Ausführungsform des Werkzeugs 10 misst der Kraftsensor 30 100% der Werkzeugkraft, die von der Kontaktfläche des Werkzeughalters 11 auf die Kontaktfläche des Kraftsensors 30 wirkt. Ein Kraftanteil der gemessenen Werkzeugkraft beträgt 100%. Dies hat den Vorteil einer Kraftmessung mit maximal hoher Empfindlichkeit, da kein Kraftanteil in einem Kraftnebenschluss ausserhalb des Kraftsensors 30 wirkt. Vorzugsweise hat der Werkzeugschaft 11 einen quadratischen Querschnitt. In der Draufsicht gemäss Fig. 2 ist erkennbar, dass das Werkzeug 10 auch zwei Kraftsensoren 30 aufweisen kann.

In der zweiten Ausführungsform des Werkzeugs 10 gemäss Fig. 3 und 4 ist der Kraftsensor 30 nicht vollständig in der Aussparung 12 im Zwischenstück 26 angeordnet.

Im Unterschied zur ersten Ausführungsform des Werkzeugs 10 weist die zweite Ausführungsform des Werkzeugs 10 eine Werkzeugaufnahme 21 mit einer breiteren Vertiefung 22 auf. In dieser breiteren Vertiefung 22 findet nicht nur der Werkzeugschaft 11 Platz, sondern auch noch das Zwischenstück 26. Dabei ist der Kraftsensor 30 nicht vollständig in der Aussparung 12 im Zwischenstück 26 angeordnet. Nicht vollständig in der Aussparung 12 im Zwischenstück 26 angeordnet heisst im Sinne der Erfindung, dass der Kraftsensor 30 bereichsweise über das Zwischenstück 26 hervorsteht. Eine Kontaktfläche vom Zwischenstück 26 und die Kontaktfläche vom Kraftsensor 30 liegen in einer Kontaktebene 31 aneinander an. In der Kontaktebene 31 erfolgt ein mechanischer Kontakt zwischen dem Zwischenstück 26 und einer Kontaktfläche vom Werkzeugschaft 11 einzig über die Kontaktfläche vom Kraftsensor 30. In dieser zweiten Ausführungsform des Werkzeugs 10 misst der Kraftsensor 30 100% der Werkzeugkraft, die von der Kontaktfläche des Werkzeugschafts 11 auf die Kontaktfläche des Kraftsensors 30 wirkt. Ein Kraftanteil der gemessenen Werkzeugkraft beträgt 100%. Dies hat den Vorteil einer Kraftmessung mit maximal hoher Empfindlichkeit, da kein Kraftanteil in einem Kraftnebenschluss ausserhalb des Kraftsensors 30 wirkt. In der Draufsicht gemäss Fig. 3 ist die breitere Vertiefung 22 durch das Zwischenstück 26 teilweise verdeckt. Es ist jedoch gut zu erkennen, dass sich zwei Kraftsensoren 30, die im Zwischenstück 26 angeordnet sind, in Wirkverbindung mit dem Werkzeugschaft 11 befinden.

In der dritten Ausführungsform des Werkzeugs 10 gemäss Fig. 5 ist der Kraftsensor 30 nicht vollständig in der Aussparung 12 im Werkzeughalter 20 angeordnet. Nicht vollständig in der Aussparung 12 im Werkzeughalter 20 angeordnet heisst im Sinne der Erfindung, dass der Kraftsensor 30 bereichsweise über den Werkzeughalter 20 hervorsteht. Eine Kontaktfläche vom Werkzeugschaft 11 und die Kontaktfläche vom Kraftsensor 30 liegen in einer Kontaktebene 31 aneinander an. In der Kontaktebene 31 erfolgt ein mechanischer Kontakt zwischen dem Werkzeughalter 20 und der Kontaktfläche vom Werkzeugschaft 11 einzig über die Kontaktfläche vom Kraftsensor 30. In dieser dritten Ausführungsform des Werkzeugs 10 misst der Kraftsensor 30 100% der Werkzeugkraft, die von der Kontaktfläche des Werkzeugschafts 11 auf die Kontaktfläche des Kraftsensors 30 wirkt. Ein Kraftanteil der gemessenen Werkzeugkraft beträgt 100%. Dies hat den Vorteil einer Kraftmessung mit maximal hoher Empfindlichkeit, da kein Kraftanteil in einem Kraftnebenschluss ausserhalb des Kraftsensors 30 wirkt.

In der vierten Ausführungsform des Werkzeugs 10 gemäss Fig. 6 ist der Kraftsensor 30 nicht vollständig in der Aussparung 12 im Werkzeughalter 20 angeordnet. Nicht vollständig in der Aussparung 12 im Werkzeughalter 20 angeordnet heisst im Sinne der Erfindung, dass der Kraftsensor 30 bereichsweise über den Werkzeughalter 20 hervorsteht. Eine Kontaktfläche von einem Zwischenstück 26 und die Kontaktfläche vom Kraftsensor 30 liegen in einer Kontaktebene 31 aneinander an. In der Kontaktebene 31 erfolgt ein mechanischer Kontakt zwischen dem Werkzeughalter 20 und der Kontaktfläche vom Zwischenstück 26 einzig über die Kontaktfläche vom Kraftsensor 30. In dieser vierten Ausführungsform des Werkzeugs 20 misst der Kraftsensor 30 100% der Werkzeugkraft, die von der Kontaktfläche des Zwischenstücks 26 auf die Kontaktfläche des Kraftsensors 30 wirkt. Ein Kraftanteil der gemessenen Werkzeugkraft beträgt 100%. Dies hat den Vorteil einer Kraftmessung mit maximal hoher Empfindlichkeit, da kein Kraftanteil in einem Kraftnebenschluss ausserhalb des Kraftsensors 30 wirkt.

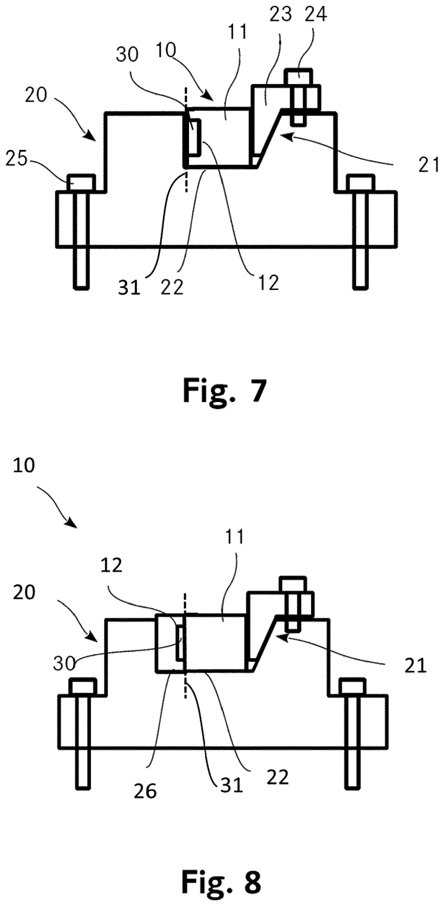

In der fünfte Ausführungsform des Werkzeugs 10 gemäss Fig. 7 ist der Kraftsensor 30 vollständig in der Aussparung 12 im Werkzeugschaft 11 angeordnet. Vollständig in der Aussparung 12 im Werkzeugschaft 11 angeordnet heisst im Sinne der Erfindung, dass der Kraftsensor nicht über den Werkzeugschaft 11 hervorsteht. Der Werkzeugschaft 11 und der darin vollständig angeordnete Kraftsensor 30 bilden eine gemeinsame Kontaktfläche. Ein erster Teil der gemeinsamen Kontaktfläche ist eine Kontaktfläche des Werkzugschafts 11, und ein zweiter Teil der gemeinsamen Kontaktfläche ist die Kontaktfläche des Kraftsensors 30. Die gemeinsame Kontaktfläche ist beispielsweise plan geschliffen. Die gemeinsame Kontaktfläche vom Werkzeugschaft 11 und vom Kraftsensor 30 und eine Kontaktfläche vom Werkzeughalter 20 liegen in einer Kontaktebene 31 aneinander an. In der Kontaktebene 31 erfolgt ein mechanischer Kontakt zwischen dem Werkzeugschaft 11 und der Kontaktfläche vom Werkzeughalter 20 über die gemeinsame Kontaktfläche vom Werkzeugschaft 11 und vom Kraftsensor 30. In der fünften Ausführungsform des Werkzeughalters 20 misst der Kraftsensor 30 weniger als 100% der Werkzeugkraft, die auf die gemeinsame Kontaktfläche wirkt, denn ein Kraftnebenschluss wirkt ausserhalb des Kraftsensors 30 von der Kontaktfläche des Werkzeugschafts 11 auf die Kontaktfläche des Werkzeughalters 20. Ein Kraftanteil der gemessenen Werkzeugkraft beträgt weniger als 100%. Dies hat den Vorteil einer Kraftmessung mit hoher mechanischer Stabilität und hoher Eigenfrequenz, da kein mechanisches Durchbiegen vom Werkzeughalter 20 möglich ist, denn die gemeinsame Kontaktfläche vom Werkzeugschaft 11 und vom Kraftsensor 30 ist vorteilhafterweise weitgehend genauso gross wie die Kontaktfläche vom Werkzeughalter 20.

In der sechsten Ausführungsform des Werkzeugs 10 gemäss Fig. 8 ist der Kraftsensor 30 vollständig in der Aussparung 12 im Zwischenstück 26 angeordnet. Vollständig in der Aussparung 12 im Zwischenstück 26 angeordnet heisst im Sinne der Erfindung, dass der Kraftsensor 30 nicht über das Zwischenstück 26 hervorsteht. Das Zwischenstück 26 und der darin angeordnete Kraftsensor 30 bilden eine gemeinsame Kontaktfläche. Ein erster Teil der gemeinsamen Kontaktfläche ist eine Kontaktfläche des Zwischenstücks 26, und ein zweiter Teil der gemeinsamen Kontaktfläche ist die Kontaktfläche des Kraftsensors 30. Die Kontaktfläche ist beispielsweise plan geschliffen. Die gemeinsame Kontaktfläche vom Zwischenstück 26 und vom Kraftsensor 30 und die Kontaktfläche vom Werkzeugschaft 11 liegen in einer Kontaktebene 31 aneinander an. In der Kontaktebene 31 erfolgt ein mechanischer Kontakt zwischen dem Zwischenstück 26 und der Kontaktfläche vom Werkzeugschaft 11 über die gemeinsame Kontaktfläche vom Zwischenstück 26 und vom Kraftsensor 30. In der sechsten Ausführungsform des Werkzeughalters 20 misst der Kraftsensor 30 weniger als 100% der Werkzeugkraft, die von der Kontaktfläche des Werkzeugschafts 11 auf die gemeinsame Kontaktfläche wirkt, denn ein Kraftnebenschluss wirkt ausserhalb des Kraftsensors 30 von der Kontaktfläche des Werkzeugschafts 11 auf die Kontaktfläche des Zwischenstücks 26. Ein Kraftanteil der gemessenen Werkzeugkraft beträgt weniger als 100%. Dies hat den Vorteil einer Kraftmessung mit hoher mechanischer Stabilität und hoher Eigenfrequenz, da kein mechanisches Durchbiegen vom Werkzeugschaft 11 möglich ist, denn die gemeinsame Kontaktfläche vom Zwischenstück 26 und vom Kraftsensor 30 ist vorteilhafterweise weitgehend genauso gross wie die Kontaktfläche vom Werkzeugschaft 11.

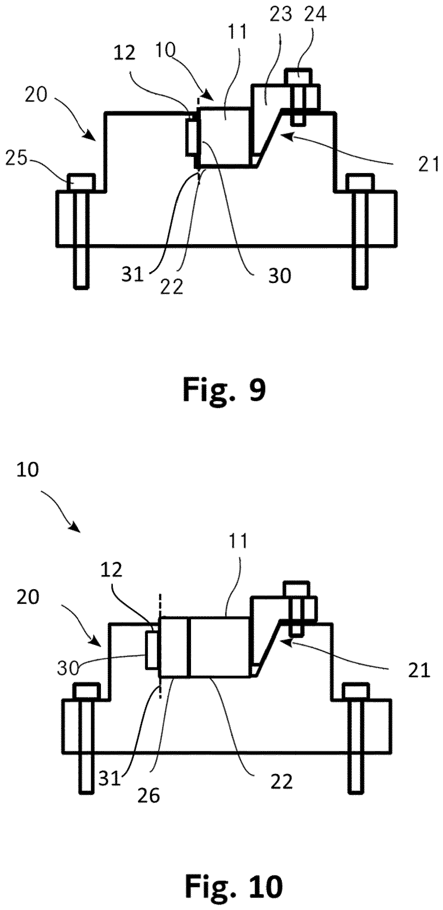

In der siebten Ausführungsform des Werkzeugs 10 gemäss Fig. 9 ist der Kraftsensor 30 vollständig in der Aussparung 12 im Werkzeughalter 20 angeordnet. Vollständig in der Aussparung 12 im Werkzeughalter 20 angeordnet heisst im Sinne der Erfindung, dass der Kraftsensor nicht über den Werkzeughalter 20 hervorsteht. Der Werkzeughalter 20 und der darin vollständig angeordnete Kraftsensor 30 bilden eine gemeinsame Kontaktfläche. Ein erster Teil der gemeinsamen Kontaktfläche ist eine Kontaktfläche des Werkzeughalters 20, und ein zweiter Teil der gemeinsamen Kontaktfläche ist die Kontaktfläche des Kraftsensors 30. Die gemeinsame Kontaktfläche ist beispielsweise plan geschliffen. Die gemeinsame Kontaktfläche vom Werkzeughalter 20 und vom Kraftsensor 30 und eine Kontaktfläche vom Werkzeugschaft 11 liegen in einer Kontaktebene 31 aneinander an. In der Kontaktebene 31 erfolgt ein mechanischer Kontakt zwischen dem Werkzeughalter 20 und der Kontaktfläche vom Werkzeugschaft 11 über die gemeinsame Kontaktfläche vom Werkzeughalter 20 und vom Kraftsensor 30. In der siebten Ausführungsform des Werkzeughalters 20 misst der Kraftsensor 30 weniger als 100% der Werkzeugkraft, die auf die gemeinsame Kontaktfläche wirkt, denn ein Kraftnebenschluss wirkt ausserhalb des Kraftsensors 30 von der Kontaktfläche des Werkzeugschafts 11 auf die Kontaktfläche des Werkzeughalters 20. Ein Kraftanteil der gemessenen Werkzeugkraft beträgt weniger als 100%. Dies hat den Vorteil einer Kraftmessung mit hoher mechanischer Stabilität und hoher Eigenfrequenz, da kein mechanisches Durchbiegen vom Werkzeugschaft 11 möglich ist, denn die gemeinsame Kontaktfläche vom Werkzeughalter 20 und vom Kraftsensor 30 ist vorteilhafterweise weitgehend genauso gross wie die Kontaktfläche vom Werkzeugschaft 11.

In der achten Ausführungsform des Werkzeugs 10 gemäss Fig. 10 ist der Kraftsensor 30 vollständig in der Aussparung 12 im Werkzeughalter 20 angeordnet. Vollständig in der Aussparung 12 im Werkzeughalter 20 angeordnet heisst im Sinne der Erfindung, dass der Kraftsensor nicht über den Werkzeughalter 20 hervorsteht. Der Werkzeughalter 20 und der darin vollständig angeordnete Kraftsensor 30 bilden eine gemeinsame Kontaktfläche. Ein erster Teil der gemeinsamen Kontaktfläche ist eine Kontaktfläche des Werkzeughalters 20, und ein zweiter Teil der gemeinsamen Kontaktfläche ist die Kontaktfläche des Kraftsensors 30. Die gemeinsame Kontaktfläche ist beispielsweise plan geschliffen. Die gemeinsame Kontaktfläche vom Werkzeughalter 20 und vom Kraftsensor 30 und eine Kontaktfläche von einem Zwischenstück 26 liegen in einer Kontaktebene 31 aneinander an. In der Kontaktebene 31 erfolgt ein mechanischer Kontakt zwischen dem Werkzeughalter 20 und der Kontaktfläche vom Zwischenstück 26 über die gemeinsame Kontaktfläche vom Werkzeughalter 20 und vom Kraftsensor 30. In der achten Ausführungsform des Werkzeughalters 20 misst der Kraftsensor 30 weniger als 100% der Werkzeugkraft, die auf die gemeinsame Kontaktfläche wirkt, denn ein Kraftnebenschluss wirkt ausserhalb des Kraftsensors 30 von der Kontaktfläche des Zwischenstücks 26 auf die Kontaktfläche des Werkzeughalters 20. Ein Kraftanteil der gemessenen Werkzeugkraft beträgt weniger als 100%. Dies hat den Vorteil einer Kraftmessung mit hoher mechanischer Stabilität und hoher Eigenfrequenz, da kein mechanisches Durchbiegen vom Zwischenstück 26 möglich ist, denn die gemeinsame Kontaktfläche vom Werkzeughalter 20 und vom Kraftsensor 30 ist vorteilhafterweise weitgehend genauso gross wie die Kontaktfläche vom Zwischenstück 26.

### Bezugszeichenliste

- 10: Werkzeug
- 11: Werkzeugschaft
- 12: Aussparung
- 20: Werkzeughalter
- 21: Werkzeugaufnahme
- 22: Vertiefung
- 23: Keil
- 24: Einspannschraube
- 25: Befestigungsschrauben
- 26: Zwischenstück
- 30: Kraftsensor
- 31: Kontaktebene

## Patentansprüche

1. Werkzeug (10), das einen Werkzeugschaft (11) umfasst, der in einer Werkzeugaufnahme (21) eines Werkzeughalters (20) aufgenommen ist; das Werkzeug (10) umfasst auch genau einen Kraftsensor (30), welcher Kraftsensor (30) in einer Aussparung (12) am Werkzeugschaft (11) angeordnet ist; welcher Kraftsensor (30) eine im Betrieb des Werkzeugs (10) vom Werkzeugschaft (11) auf den Werkzeughalter (20) wirkende Werkzeugkraft misst;
welches Werkzeug (10) ein Schneidwerkzeug ist, welches Schneidwerkzeug feststehend und rotationsfrei angeordnet ist, wobei der Werkzeughalter (20) rotationsfrei ist; wobei die Aussparung (12) entweder im Werkzeugschaft (11) oder im Werkzeughalter (20) angebracht ist;
wobei die Werkzeugaufnahme (21) eine Einspannvorrichtung aufweist, zum Einspannen des Werkzeugschafts (11);
**dadurch gekennzeichnet, dass** die Einspannvorrichtung einen Keil (23) aufweist;
dass der Kraftsensor (30) mit einer Vorspannkraft vorgespannt ist; und
dass die Vorspannkraft einer Einspannkraft entspricht, die von einer Einspannvorrichtung der Werkzeugaufnahme (21) auf den Kraftsensor (30) wirkt.

2. Werkzeug (10), das einen Werkzeugschaft (11) umfasst, der in einer Werkzeugaufnahme (21) eines Werkzeughalters (20) aufgenommen ist; das Werkzeug (10) umfasst auch genau einen Kraftsensor (30), welcher Kraftsensor (30) in einer Aussparung (12) am Werkzeugschaft (11) angeordnet ist;
welcher Kraftsensor (30) eine im Betrieb des Werkzeugs (10) vom Werkzeugschaft (11) auf den Werkzeughalter (20) wirkende Werkzeugkraft misst;
welches Werkzeug (10) ein Schneidwerkzeug ist, welches Schneidwerkzeug feststehend und rotationsfrei angeordnet ist, wobei der Werkzeughalter (20) rotationsfrei ist;
wobei die Werkzeugaufnahme (21) eine Einspannvorrichtung aufweist, zum Einspannen des Werkzeugschafts (11);
**dadurch gekennzeichnet, dass** die Einspannvorrichtung einen Keil (23) aufweist;
dass der Kraftsensor (30) mit einer Vorspannkraft vorgespannt ist; und
dass die Vorspannkraft einer Einspannkraft entspricht, die von einer Einspannvorrichtung der Werkzeugaufnahme (21) auf den Kraftsensor (30) wirkt;
dass das Werkzeug (10) ein Zwischenstück (26) umfasst, das in der Werkzeugaufnahme (21) aufgenommen ist; dass die Aussparung (12) im Zwischenstück (26) angebracht ist; und
dass der Kraftsensor (30) eine im Betrieb des Werkzeugs (10) vom Werkzeugschaft (11) auf das Zwischenstück (26) wirkende Werkzeugkraft misst.

3. Werkzeug (10) gemäss einem der Ansprüche 1 oder 2, **dadurch gekennzeichnet, dass** der Kraftsensor (30) nicht vollständig in der Aussparung (12) angeordnet ist, oder dass der Kraftsensor (30) vollständig in der Aussparung (12) angeordnet ist.

4. Werkzeug (10) gemäss einem der Ansprüche 1 bis 3, **dadurch gekennzeichnet, dass** der Kraftsensor (30) ein piezoelektrischer Kraftsensor ist; oder dass der Kraftsensor (30) ein Mehrachsenkraftsensor ist.

5. Werkzeug (10) gemäss einem der Ansprüche 1 bis 4, **dadurch gekennzeichnet, dass** der Kraftsensor (30) mit einer einstellbaren Vorspannkraft vorgespannt ist.

6. Werkzeug (10) gemäss einem der Ansprüche 1 bis 5, **dadurch gekennzeichnet, dass** der Kraftsensor (30) einen Form- und/oder Kraftschluss mit dem Werkzeugschaft (11) und/oder der Werkzeugaufnahme (21) aufweist.

7. Werkzeug (10) gemäss Anspruch 6, **dadurch gekennzeichnet, dass** der Form- und/oder Kraftschluss reversibel ist, oder dass der Form- und/oder Kraftschluss reproduzierbar ist.

8. Werkzeug (10) gemäss einem der Ansprüche 1 bis 7, **dadurch gekennzeichnet, dass** der Kraftsensor (30) derart ausgebildet ist, dass vom Kraftsensor (30) gemessenen Signale an eine Auswerteeinheit ableitbar sind.

9. Werkzeug (10) gemäss einem der Ansprüche 1 bis 8, **dadurch gekennzeichnet, dass** der Kraftsensor (30) derart ausgebildet ist, dass vom Kraftsensor (30) gemessenen Signale in Echtzeit überwachbar sind.

10. Verfahren zum Messen einer Werkzeugkraft, mit einem Werkzeug (10) gemäss einem der Ansprüche 1 bis 9, umfassend die Schritte: Anordnen des Kraftsensors (30) zwischen dem Werkzeugschaft (11) des Werkzeugs (10) und der Werkzeugaufnahme (21) des Werkzeughalters (20); und Einspannen des Kraftsensors (30) mithilfe der Einspannvorrichtung der Werkzeugaufnahme (21).

## Claims

1. A tool (10) comprising a tool shank (11) received in a tool holding fixture (21) of a tool holder (20); wherein the tool (10) also comprises exactly one force sensor (30), which force sensor (30) is arranged in a recess (12) at the tool shank (11); which force sensor (30) measures a tool force exerted by the tool shank (11) onto the tool holder (20) during operation of the tool (10); which tool (10) is a cutting tool, which cutting tool is arranged in a fixed and rotation-free manner; wherein the recess (12) is manufactured either in the tool shank (11) or in the tool holder (20); wherein the tool holding fixture (21) comprises a clamping device for clamping the tool shank (11); **characterized in that** the clamping device comprises a wedge (23); **in that** the force sensor (30) is pretensioned by a pretensioning force; and **in that** the pretensioning force is equal to a clamping force exerted onto the force sensor (30) by a clamping device of the tool holding fixture (21).

2. A tool (10) comprising a tool shank (11) received in a tool holding fixture (21) of a tool holder (20); wherein the tool (10) also comprises exactly one force sensor (30), which force sensor (30) is arranged in a recess (12) at the tool shank (11); which force sensor (30) measures a tool force exerted by the tool shank (11) onto the tool holder (20) during operation of the tool (10); which tool (10) is a cutting tool, which cutting tool is arranged in a fixed and rotation-free manner; wherein the recess (12) is manufactured either in the tool shank (11) or in the tool holder (20); wherein the tool holding fixture (21) comprises a clamping device for clamping the tool shank (11); **characterized in that** the clamping device comprises a wedge (23); **in that** the force sensor (30) is pretensioned by a pretensioning force; **in that** the pretensioning force is equal to a clamping force exerted onto the force sensor (30) by a clamping device of the tool holding fixture (21); **in that** the tool (10) comprises an intermediate piece (26) which is received in the tool holding fixture (21); **in that** the recess (12) is manufactured in the intermediate piece (26); and **in that** the force sensor (30) measures a tool force exerted by the tool shank (11) onto the intermediate piece (26) during operation of the tool (10) .

3. The tool (10) according to one of the claims 1 or 2, **characterized in that** the force sensor (30) is not completely accommodated within the recess (12) or **in that** the force sensor (30) is completely accommodated within the recess (12) .

4. The tool (10) according to any of the claims 1 to 3, **characterized in that** the force sensor (30) is a piezoelectric force sensor or **in that** the force sensor (30) is a multi-axis force sensor.

5. The tool (10) according to any of the claims 1 to 4, **characterized in that** the force sensor (30) is pretensioned by an adjustable pretensioning force.

6. The tool (10) according to any of the claims 1 to 5, **characterized in that** there is a form fit and/or a force fit between the force sensor (30) and the tool shank (11) and/or the tool holding fixture (21).

7. The tool (10) according to claim 6, **characterized in that** said form fit and/or force fit is reversible or **in that** said form fit and/or force fit is reproducible.

8. The tool (10) according to any of the claims 1 to 7, **characterized in that** the force sensor (30) is configured to transmit signals measured by the force sensor (30) to an evaluation device.

9. The tool (10) according to any of the claims 1 to 8, **characterized in that** the force sensor (30) is configured to enable the monitoring of signals measured by the force sensor (30) in real time.

10. A method for measuring a tool force by using a tool (10) according to any of the claims 1 to 9, said method comprising the steps of: arranging a force sensor (30) between a tool shank (11) of the tool (10) and a tool holding fixture (21) of a tool holder (20); and clamping the force sensor (30) by means of a clamping device of the tool holding fixture (21).

## Revendications

1. Outil (10) comprenant une tige d'outil (11) reçue dans un logement d'outil (21) d'un porte-outil (20) ; lequel outil (10) comprend en outre exactement un capteur de force (30), lequel capteur de force (30) est disposé dans un évidement (12) au niveau de la tige d'outil (11) ; lequel capteur de force (30) mesure une force de l'outil exercée par la tige d'outil (11) sur le porte-outil (20) pendant le fonctionnement de l'outil (10) ; lequel outil est un outil de coupe, lequel outil de coupe est disposé de manière fixe et sans rotation, dans lequel le porte-outil (20) est sans rotation ;
dans lequel l'évidement (12) est fabriqué soit dans la tige d'outil (11) soit dans le porte-outil (20) ;
dans lequel le logement d'outil (21) comporte un dispositif de serrage pour serrer la tige d'outil (11) ;
**caractérisé en ce que** le dispositif de serrage comprend une cale (23) ;
**en ce que** le capteur de force (30) est précontraint par une force de précontrainte ; et
**en ce que** ladite force de précontrainte est égale à une force de serrage exercée sur le capteur de force (30) par un dispositif de serrage du logement d'outil (21).

2. Outil (10) comprenant une tige d'outil (11) reçue dans un logement d'outil (21) d'un porte-outil (20) ; ledit outil en outre comprenant exactement un capteur de force (30), lequel capteur de force (30) est disposé dans un évidement (12) au niveau de la tige d'outil (11) ; lequel capteur de force (30) mesure une force de l'outil exercée par la tige d'outil (11) sur le porte-outil (20) pendant le fonctionnement de l'outil (10) ; lequel outil (10) est un outil de coupe, ledit outil de coupe étant disposé de manière fixe et sans rotation, dans lequel le porte-outil (20) est sans rotation ;
dans lequel le logement d'outil (21) comporte un dispositif de serrage pour serrer la tige d'outil (11) ;
**caractérisé en ce que** le dispositif de serrage comprend une cale (23) ;
**en ce que** le capteur de force (30) est précontraint par une force de précontrainte ; et
**en ce que** ladite force de précontrainte est égale à une force de serrage exercée sur le capteur de force (30) par un dispositif de serrage du logement d'outil (21) ;
**en ce que** l'outil (10) comprend une pièce intermédiaire (26) reçue dans le logement d'outil (21) ; **en ce que** l'évidement (12) est réalisé dans ladite pièce intermédiaire (26) ; et
**en ce que** le capteur de force (30) mesure une force de l'outil exercée par la tige d'outil (11) sur ladite pièce intermédiaire (26) pendant le fonctionnement de l'outil (10).

3. Outil (10) selon l'une quelconque des revendications 1 ou 2, **caractérisé en ce que** le capteur de force (30) n'est pas entièrement inséré dans l'évidement (12) ou **en ce que** le capteur de force (30) est entièrement inséré dans l'évidement (12).

4. Outil (10) selon l'une quelconque des revendications 1 à 3, **caractérisé en ce que** le capteur de force (30) est un capteur de force piézoélectrique ; ou **en ce que** le capteur de force (30) est un capteur de force multi-axes.

5. Outil (10) selon l'une quelconque des revendications 1 à 4, **caractérisé en ce que** le capteur de force (30) est précontraint par une force de précontrainte réglable.

6. Outil (10) selon l'une quelconque des revendications 1 à 5, **caractérisé en ce qu'**il existe une liaison de complémentarité de forme et/ou une liaison de force entre le capteur de force (30) et la tige d'outil (11) et/ou le logement d'outil (21).

7. Outil (10) selon la revendication 6, **caractérisé en ce que** ladite liaison de complémentarité de forme et/ou de force est réversible ou **en ce que** ladite liaison de complémentarité de forme et/ou de force est reproductible.

8. Outil (10) selon l'une quelconque des revendications 1 à 7, **caractérisé en ce que** le capteur de force (30) est configuré pour transmettre des signaux mesurés par le capteur de force (30) à un dispositif d'évaluation.

9. Outil (10) selon l'une quelconque des revendications 1 à 8, **caractérisé en ce que** le capteur de force (30) est configuré pour permettre la surveillance des signaux mesurés par le capteur de force (30) en temps réel.

10. Procédé pour mesurer une force de l'outil en utilisant un outil (10) selon l'une quelconque des revendications 1 à 9, ledit procédé comprenant les étapes consistant à : disposer le capteur de force (30) entre la tige d'outil (11) de l'outil (10) et le logement d'outil (21) du porte-outil (20) ; et serrer le capteur de force (30) au moyen du dispositif de serrage du logement d'outil (21).
